# EUROPEAN PATENT SPECIFICATION

(11) **EP 3 036 067 B1**
(45) Date of publication and mention of the grant of the patent: **14.11.2018**
(21) Application number: 14736323.8
(22) Date of filing: 19.06.2014
(51) Int. Cl.: B25B 23/00, G01S 5/00, H04B 5/00

(54) **A LOCALIZATION SYSTEM FOR A MOVABLE POWER TOOL.**
LOKALISIERUNGSSYSTEM FÜR EIN BEWEGLICHES ELEKTROWERKZEUG
SYSTÈME DE LOCALISATION POUR UN OUTIL ÉLECTRIQUE MOBILE

(30) Priority: 22.08.2013 SE 1350968
(43) Date of publication of application: 29.06.2016
(73) Proprietor: Atlas Copco Industrial Technique AB, 105 23 Stockholm (SE)
(72) Inventor: WALLGREN, Carl JOHAN Erik, S-117 32 Stockholm (SE)
(74) Representative: Tholin, Thomas
(86) International application number: PCT/EP2014/062909
(87) International publication number: WO 2015/024686

(56) References cited:
- EP-A2- 1 060 844
- WO-A1-2010/035084
- WO-A1-2010/053422
- GB-A- 2 271 692

## Description

The invention relates to a system for localization of a power tool movable within a local area, comprising a sender unit attached to the power tool, one or more receivers located within the local area, and a processing unit, wherein the sender unit is arranged to send localization signals to be picked up by the receivers.

Localization systems of the above type are previously known and used in assembly line applications, for instance motor car body assembly, where the power tool is intended to be applied in different positions on the object to be assembled. The purpose of such power tool is to collect continuous information of the power tool position to thereby enable a quality control of the assembled object. This is accomplished by ascertaining the actual power tool positions during the assembly process and to determine whether the power tool has actually performed all expected operations in all critical points and locations on the assembled object. The position of each performed operation may be provided to the receivers from the sender unit.

Normally, a first system is arranged to control that each operational step has been performed correctly and a second system is arranged to monitor the position of the power tool. The invention relates to a system of the second type, in which a sender unit is arranged to send localization signals to be picked up by the receivers.

In prior art systems of this type each sender unit has a unique identity. During operation the sender unit has been allocated to a specific power tool in order to keep track of the position of said power tool. This has shown to be disadvantageous in case of a breakdown of the sender unit. Namely if the sender unit stops to operate it needs to be replaced by another sender unit. Subsequently, the new sender unit needs to be allocated to the specific power tool to make the system aware that the power tool is now represented by the new sender unit having a unique identity data of its own, different from the first one. This means that the system has to be reprogrammed with the identity data of the new sender unit, which implies that a cumbersome and time consuming procedure has to be performed, which may imply a stop in production and demand the attention of service people. WO2010/053422A1 discloses a system according to the preamble of claim 1.

It is an object of the invention to provide a localization system for a power tool movable within a local area, comprising a sender unit attached to the power tool, and one or more receivers located in the area to receive localization signals from the sender unit, wherein there is a flexibility in the event that the sender unit should break down, without requiring a time consuming reprogramming of the entire system with new sender unit identity data unique of the substitute sender unit.

This object is achieved by the invention by means of a system for determining the position of a power tool movable within a local area, comprising a sender unit attached to the power tool, one or more receivers located within the local area, and a processing unit connected to the receivers, wherein the sender unit is arranged to send localization signals reflecting positional data to be picked up by said one or more receivers. The power tool is provided with a memory programmed with a specific identity data of the power tool. A data transferring unit is provided for transferring said specific identity data from the memory of the power tool to the sender unit when the sender unit is installed on the power tool. The memory of the power tool may e.g. be arranged on printed circuit board (PCB).

Further objects and advantages of the invention will appear from the following specification and claims.

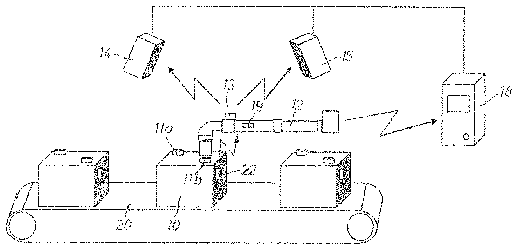

An embodiment of the invention is described below in further detail with reference to the accompanying drawing.

In the drawing there a localization system according to the invention is schematically illustrated. The system includes a power tool movable in a local area and carrying a sender unit, two receivers, which in the shown embodiment are stationary, for picking up signals from the sender unit, and a processing unit.

As illustrated in the drawing the local area includes an assembly station for an object to be assembled and a system for determining the actual position of a power tool 12 used for the assembly work within the area. Although the assembly line illustrated in the drawing shows three objects travelling through the assembly station the following description of the system will be related to just one of those objects, namely the object identified by the numeral 10. The same assembly process, though, will be applied on all of the objects successively passing through the assembly station, namely the application of the power tool 12 on a number of critical points 11 a,b on the object 10. In the illustrated example the power tool 12 is a power wrench, and the critical points 11 a,b on the object 10 comprise screw joints to be tightened by the power wrench 12.

As mentioned above, the system is situated in a local area and comprises a power tool 12 provided with a sender unit 13 arranged to emit localization signals, two receivers 14,15 located in the local area and intended to receive the signals from the sender unit 13, and a processing unit 18 arranged to calculate and monitor the position of the power tool. In contrast to prior art systems the sender unit 13 need not be provided with unique identification data for enabling the receivers 14,15 and the processing unit 18 to identify the sender unit 13 attached to the power tool 12. Instead, the power tool 12 has a unique identity

In contrast to prior art sender units for this purpose, which are programmed with unique identification data at manufacturing, this sender unit 13 either has no identification or gets its identification data from a memory 19 integrated in the power tool 12 at the installment on the latter. The memory 19 of the power tool 12 is provided with identification data related to the specific power tool, and a data transferring unit (not illustrated) is arranged to transfer the identification data from the memory 19 of the power tool 12 to the sender unit 13 when the latter is installed on the power tool 12. The identification data of the power tool may be automatically transferred to the installed sender unit each time the power tool and/or sender unit is/are activated. It may also be transferred only once, in conjunction to when the sender unit is installed on the power tool.

The benefit gained from this arrangement is that the sender unit 13 attached to the power tool 12 could be one of a number of similar sender units which may replace each other at an occasional break down of the specific sender unit currently attached to the power tool 12, wherein the same identification data can be used for the substitute sender unit and no reprogramming of the system would be necessary. Such reprogramming of the system would otherwise be cumbersome and time consuming and would call for the attention of service people.

The sender unit 13 should be capable of sending and receiving information, and it may be provided with a memory in order to store said information. If information related to the Id of the power tool is stored in the memory of the sender unit 13 this information will not have to be provided by the power tool 12 to the sender unit 13 each time the power tool is powered. Instead, this information only needs to be transferred once as the sender unit 13 is installed on the power tool. In such a case the sender unit 13 may be arranged to verify that the stored power tool Id corresponds to the power tool on which it is installed.

Localization signals emitted from the sender unit 13 attached to the power tool 12 and picked up by the receivers 14,15 are continuously transferred to the processing unit 18, whereby the latter is able to inform an external process monitoring system whether the power tool 12 has been applied on all the critical points 11a,b on the object 10 to be assembled or not. This is a part of a quality ascertaining process by which an acceptable and approved assembly of the object in question may be guaranteed.

In a simpler embodiment of the inventive system the number of receivers could be reduced to just one, wherein the accuracy of the position determination is not critical, and the purpose of the system is a presence check of the power tool in the defined local area.

In an assembly line application, as the one illustrated in the drawing, the object 10 is carried on a travelling support 20, and the power tool position locating system also comprises a signal sender unit 22 attached to the object 10 being assembled, wherein the receivers 14,15 pick up signals also from that sender unit 22. In this case the system for determining the position of the power tool is able to take into account the successively changing position of the object 10 and the critical points 11a,b to be worked by the power tool 12 and to determine the position of the power tool 12 in relation to these points 11a,b.

As to the signal transmission between the sender unit 12 and the receivers 14,15 different types of signals systems may be used. For instance the sender unit be of the type adapted to communicate via radio frequency signals, Blue tooth or other commercially available systems for transferring signals. Also, optical or acoustic signals may be used. Further, the sender unit may be arranged to receive information from the power tool via a physical connection or via a contactless interface. Similarly it may be arranged to send data wirelessly, as indicated above, but it may of course also be arranged with a wire for transferring information/data to the receivers 14,15.

The embodiments of the invention are not limited to the shown and described example but may be freely varied within the scope of the claims. For instance, the processing unit may be incorporated in one of the receivers.

## Claims

1. A system for determining the position of a power tool (12) movable within a local area, comprising a sender unit (13) attached to the power tool (12), one or more receivers (14,15) located within the local area, and a processing unit (18) connected to the receivers (14,15), wherein the sender unit (13) is arranged to send localization signals reflecting positional data of the power tool (12) to be picked up by said one or more receivers (14,15), **characterized in that**
- the power tool (12) is provided with a memory (19) programmed with specific identity data of the power tool, and
- a data transferring unit is provided for transferring the specific identity data from the memory (19) of the power tool (12) to the sender unit (13) when the sender unit (13) is installed on the power tool (12).

2. A system according to claim 1, wherein the sender unit (13) is one of a number of interchangeable sender units, and said transferring unit is provided to transfer the identity data from the power tool memory (19) to anyone of the interchangeable sender units (13) when the latter is installed on the power tool (12).

3. A system according to claim 1 or 2, wherein the processing unit (18) is integrated in said one or more receivers (14,15).

4. A system according to anyone of claims 1-3, wherein an object (10) on which the power tool is arranged to operate is carried on a travelling assembly line support (20) and is provided with a sender unit (22) for emitting signals to be picked up by said one or more receivers (14,15) for continuous determination of the actual position of the object (10).

5. A system according to claim 4, wherein the processing unit (18) is arranged to compare the positional data of the power tool (12) to said determination of the actual position of the object (10) so as to determine the relative position of the power tool (12) with respect to the object (12).

## Patentansprüche

1. System zum Ermitteln der Position eines kraftbetriebenen Werkzeugs (12), das innerhalb eines lokalen Bereichs beweglich ist, wobei das System eine Sendeeinheit (13), die am kraftbetriebenen Werkzeug (12) befestigt ist, einen oder mehrere Empfänger (14, 15), die sich innerhalb des lokalen Bereichs befinden, und eine Verarbeitungseinheit (18) umfasst, die mit den Empfängern (14, 15) verbunden ist, wobei die Sendeeinheit (13) ausgelegt ist, Lokalisierungssignale zu senden, die Positionsdaten des kraftbetriebenen Werkzeugs (12) widerspiegeln, die von dem einen oder den mehreren Empfängern (14, 15) aufzunehmen sind, **dadurch gekennzeichnet, dass**
- das kraftbetriebene Werkzeug (12) mit einem Arbeitsspeicher (19) ausgestattet ist, der mit spezifischen Identitätsdaten des kraftbetriebenen Werkzeugs programmiert ist, und
- eine Datentransfereinheit zum Transferieren der spezifischen Identitätsdaten vom Arbeitsspeicher (19) des kraftbetriebenen Werkzeugs (12) zur Sendeeinheit (13) vorgesehen ist, wenn die Sendeeinheit (13) auf dem kraftbetriebenen Werkzeug (12) installiert ist.

2. System nach Anspruch 1, wobei die Sendeeinheit (13) eine von einer Anzahl von austauschbaren Sendeeinheiten ist, und die Transfereinheit vorgesehen ist, um die Identitätsdaten vom Arbeitsspeicher (19) des kraftbetriebenen Werkzeugs zu einer beliebigen der austauschbaren Sendeeinheiten (13) zu transferieren, wenn letztere auf dem kraftbetriebenen Werkzeug (12) installiert ist.

3. System nach Anspruch 1 oder 2, wobei die Verarbeitungseinheit (18) in dem einen oder den mehreren Empfängern (14, 15) integriert ist.

4. System nach einem der Ansprüche 1-3, wobei ein Objekt (10), an dem das kraftbetriebene Werkzeug ausgelegt ist zu arbeiten, auf einem verfahrbaren Montagebandträger (20) getragen wird und mit einer Sendeeinheit (22) zum Emittieren von Signalen ausgestattet ist, die von dem einen oder den mehreren Empfängern (14, 15) für eine fortlaufende Ermittlung der tatsächlichen Position des Objekts (10) aufzunehmen sind.

5. System nach Anspruch 4, wobei die Verarbeitungseinheit (18) ausgelegt ist, die Positionsdaten des kraftbetriebenen Werkzeugs (12) mit der Ermittlung der tatsächlichen Position des Objekts (10) zu vergleichen, um die relative Position des kraftbetriebenen Werkzeugs (12) in Bezug auf das Objekt (12) zu ermitteln.

## Revendications

1. Système pour déterminer la position d'un outil électrique (12) mobile à l'intérieur d'une zone locale, comprenant une unité d'émetteur (13) attachée à l'outil électrique (12), un ou plusieurs récepteurs (14, 15) situés dans la zone locale, et une unité de traitement (18) reliée aux récepteurs (14, 15), l'unité d'émetteur (13) étant agencée pour envoyer des signaux de localisation, reflétant des données de position de l'outil électrique (12), destinés à être captés par ledit ou lesdits récepteurs (14, 15),
**caractérisé par le fait que**
- l'outil électrique (12) comporte une mémoire (19) programmée avec des données d'identité spécifiques de l'outil électrique, et
- une unité de transfert de données est prévue pour transférer les données d'identité spécifiques de la mémoire (19) de l'outil électrique (12) à l'unité d'émetteur (13) lorsque l'unité d'émetteur (13) est installée sur l'outil électrique (12).

2. Système selon la revendication 1, dans lequel l'unité d'émetteur (13) est l'une parmi un nombre d'unités d'émetteur interchangeables, et ladite unité de transfert est prévue pour transférer les données d'identité de la mémoire d'outil électrique (19) à l'une quelconque des unités d'émetteur interchangeables (13) lorsque cette dernière est installée sur l'outil électrique (12).

3. Système selon la revendication 1 ou 2, dans lequel l'unité de traitement (18) est intégrée dans ledit ou lesdits récepteurs (14, 15).

4. Système selon l'une quelconque des revendications 1 à 3, dans lequel un objet (10), sur lequel l'outil électrique est destiné à travailler, est porté sur un support de ligne d'assemblage à déplacement (20) et comporte une unité d'émetteur (22) pour émettre des signaux destinés à être capés par ledit ou lesdits récepteurs (14, 15) pour une détermination continue de la position réelle de l'objet (10).

5. Système selon la revendication 4, dans lequel l'unité de traitement (18) est agencée pour comparer les données de position de l'outil électrique (12) à ladite détermination de la position réelle de l'objet (10) de façon à déterminer la position relative de l'outil électrique (12) par rapport à l'objet (12).
